Europäisches Patentamt

European Patent Office

Office européen des brevets

(11) Numéro de publication: **0 033 273**
**A2**

(12) **DEMANDE DE BREVET EUROPEEN**

(21) Numéro de dépôt: **81400089.9**

(22) Date de dépôt: **22.01.81**

(51) Int. Cl.³: **H 02 J 13/00**
**H 02 J 3/14**

(30) Priorité: **25.01.80 FR 8001607**

(43) Date de publication de la demande:
**05.08.81 Bulletin 81/31**

(84) Etats contractants désignés:
**AT BE CH DE GB IT LI LU NL SE**

(71) Demandeur: **Alberti, Rosette**
**7 Rue Marie Bonaparte**
**F-92210 Saint Cloud(FR)**

(72) Inventeur: **Alberti, Rosette**
**7 Rue Marie Bonaparte**
**F-92210 Saint Cloud(FR)**

(74) Mandataire: **Lemonnier, André**
**Cabinet LEMONNIER 4, Boulevard Saint Denis**
**F-75010 Paris(FR)**

(54) Perfectionnement aux relais de délestage.

㉟ La présente invention concerne les relais de délestages montés dans des réseaux à modulation de la puissance allouée par modification par télécommande du seuil de déclenchement du disjoncteur de puissance.

Selon le procédé et avec le relais de délestage conforme à l'invention, un signal antérieur ou le signal de téléréglage du seuil du disjoncteur détecte, par un contacteur 15 modifié, la puissance de consigne (par le relais 12) du relais de délestage 16.

L'invention permet d'adapter les relais de délestage aux réseaux à modulation de la puissance allouée.

./...

1

Perfectionnement aux relais de délestage.

On connaît plusieurs types d'appareils dits relais de délestage qui sont des appareils électriques permettant de sélectionner dans une installation les appareils prioritaires. Ces appareils ont pour but, lorsque l'intensité maximale souscrite tend à être dépassée, de couper l'alimentation des appareils non prioritaires afin d'éviter soit une pénalité pour dépassement, soit la coupure par le disjoncteur de puissance.

Il est connu de réaliser des appareils sélectionnant l'ordre de coupure des appareils en fonction d'un ordre de priorité, ces appareils étant en général basés sur un microprocesseur qui commande l'ordre d'ouverture des circuits d'alimentation des différents appareils. On a également proposé des appareils dits à seuils multiples qui, en fait, sont basés comme les disjoncteurs de puissance sur un pont de shuntage réglable mais dont le réglage est effectué une fois pour toutes.

Or il a été proposé dans la demande de brevet française N° 79 21897 du 31 Août 1979 de moduler, par téléréglage du seuil du disjoncteur de puissance, la puissance dont dispose l'usager. Ce procédé d'exploitation du réseau oblige donc à modifier la puissance de référence qui détermine le fonctionnement du relais de délestage.

La présente invention a en conséquence pour objet un procédé d'exploitation d'un réseau électrique par modulation de la puissance par téléréglage du seuil de déclenchement des disjoncteurs de puissance caractérisé en ce qu'on envoie un signal associé au signal de commande de modification du seuil de déclenchement du disjoncteur, pour modifier la puissance de consigne ou seuil de fonctionnement du relais de délestage associé. Ce signal peut être différent du signal de commande de modification du seuil de déclenchement du disjoncteur mais, du fait des temps de réaction des détecteurs de puissance, le même signal peut commander la modification des seuils de fonctionnement des deux appareils.

Avec le procédé ci-dessus, le relais de délestage coupe les appareils non prioritaires pour réduire la puissance consommée dans la limite de la puissance dite puissance de consigne qui va être la nouvelle puissance allouée après la modification du seuil de réglage du disjoncteur de puissance.

La présente invention a également pour objet un relais de délestage caractérisé en ce qu'il comporte un détecteur de signal de commande qui modifie le seuil de fonctionnement du détecteur de puissance consommée du relais de délestage.

La modification du seuil de fonctionnement peut être obtenue soit par ouverture d'un shunt calibré monté en parallèle avec le détecteur de puissance, soit par ouverture d'un shunt court-circuitant, parmi une pluralité de détecteurs de puissance, ceux dont le seuil de fonctionnement est inférieur à la puissance autorisée, soit par commutation des circuits de commande entre les détecteurs de puissance et les disjoncteurs contrôlant les circuits d'alimentation des différents groupes d'appareils.

Selon un mode de réalisation particulier, le dispositif de télécommande et le ou les détecteurs de puissance sont communs au disjoncteur de puissance et au relais de délestage, un retard étant introduit dans le fonctionnement du disjoncteur de puissance.

Selon une autre caractéristique, le dépassement de la puissance de consigne pour la puissance allouée la plus faible est pré-détecté pendant le fonctionnement à la puissance allouée maximale pour délester, dès la réception du signal de modification de la puissance allouée.

D'autres caractéristiques de la présente invention apparaitront à la lecture de la description de divers modes de réalisation donnés à titre de simples exemples, la description étant faite avec référence aux dessins ci-annexés dans lesquels :

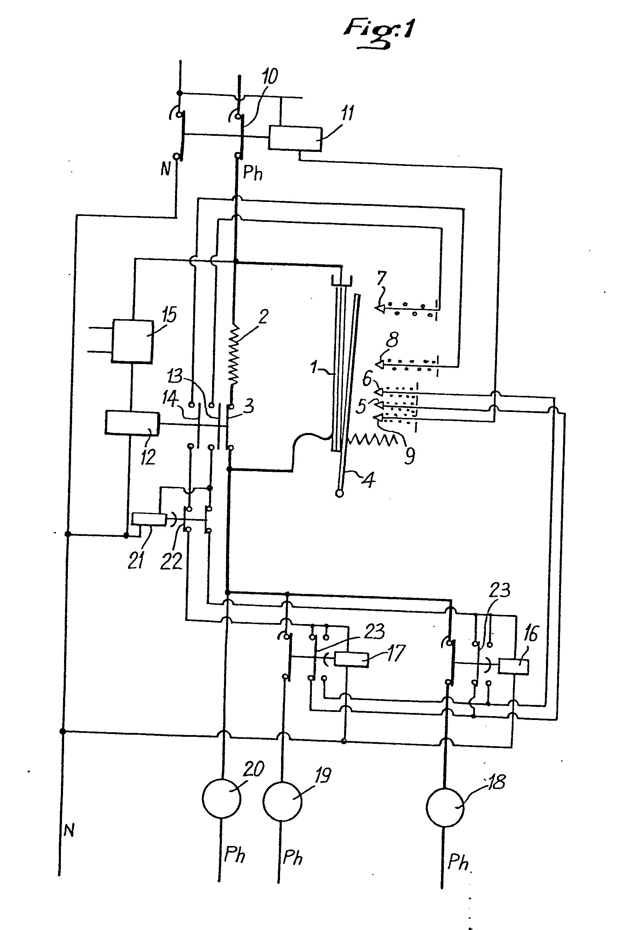

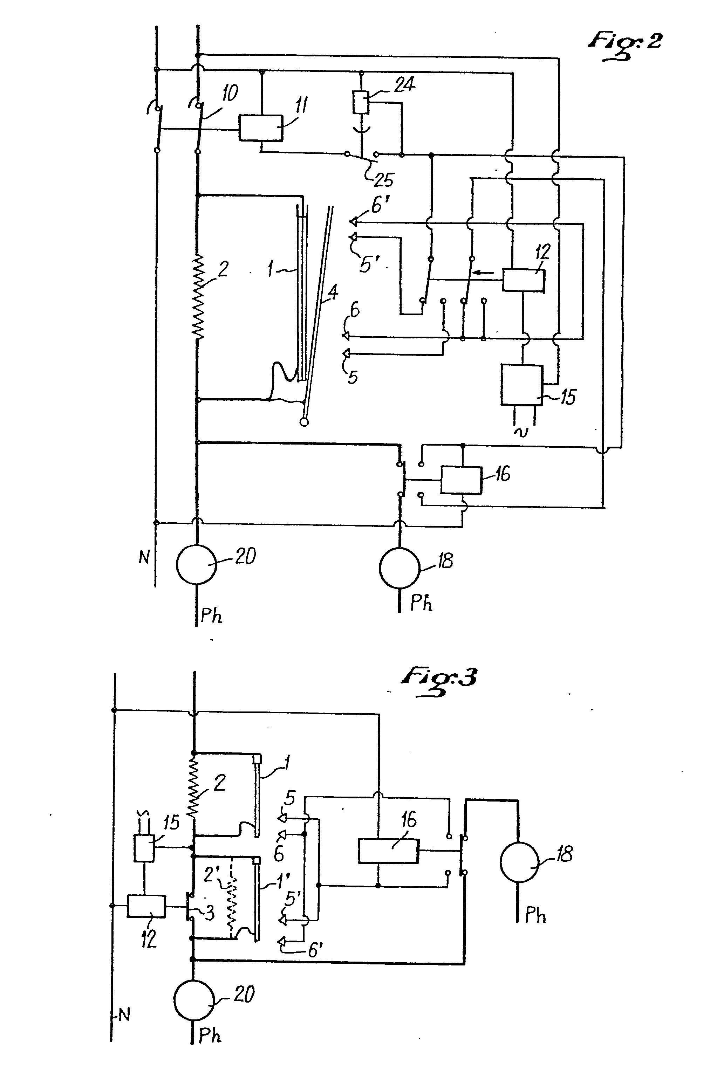

La figure 1 est un schéma d'un relais de délestage à ouverture d'un shunt calibré; la figure 2 est un schéma d'un relais de délestage à commutation des circuits de commande des disjoncteurs de puissance et de délestage et la figure 3 est un schéma d'un relais de délestage avec commutation entre deux détecteurs de puissance.

Le relais de délestage de la figure 1 comporte un détecteur de puissance constitué par un bilame 1, ce bilame étant shunté par une résistance 2 qui peut être un pont de résistances en parallèle. En série avec la résistance 2 est montée l'armature 3 normalement fermée du relais de téléréglage. La valeur du shunt est telle que le rapport entre la résistance du bilame et du shunt en parallèle et la résistance du bilame seul correspond au rapport entre la puissance de consigne du délestage en période de crise (puissance minimale) et celle en période normale (puissance souscrite). La déformation du bilame va donc être fonction du rapport de la puissance consommée à la puissance de consigne lorsque l'armature 3 est ouverte et fonction d'une fraction de ce rapport lorsque l'armature est fermée, cette fraction étant égale au rapport résistance du bilame et du shunt en parallèle sur résistance du bilame.

La déformation du bilame est détectée par une lame oscillante 4 qui amplifie ses déformations et qui coopère avec des contacts élastiques de positions réglables 5, 6, 7, 8 et 9 dans le présent cas. Le contact 5 est fermé lorsque la puissance de consigne est dépassée. Le contact 6 est un contact de réenclenchement lorsque la puissance consommée retombe à une fraction réautorisant la remise en circuit des appareils consommateurs coupés après que le relais ait délesté, quelle que soit la puissance de consigne. Le contact 7 correspond à la déformation du bilame dans le cas où la puissance consommée dépasse la puissance de consigne minimale alors que le relais de délestage fonctionne avec la puissance de consigne de délestage maximale et le contact 8 correspond à la déformation du bilame dans le cas où la puissance consommée correspond à la valeur d'établissement du contact 7 augmentée de la puissance nominale des appareils consommateurs non prioritaires et le contact 9 est un contact supplémentaire fermé lorsque l'intensité dépasse de quelques pour cent l'intensité fermant le contact 5 et constituant un contact de commande du déclencheur du disjoncteur. A titre d'exemple, soit une puissance souscrite de 9kw ramenée à 3 kw en heure de crise, des appareils prioritaires de puissance nominale 2kw, des appareils de seconde priorité de puissance nominale 8kw et des appareils non prioritaires ayant une puissance nominale de 4kw. Le contact 5 se fermera pour 9 kw soit 3 kw traversant le bilame et le contact 6 se fermera pour, par exemple, 2kw 6 traversant le bilame soit 8 kw de puissance consommée pour la puissance de consigne maximale, le contact 7 sera fermé, en fonctionnement à la puissance de consigne maximale, pour 3 kw soit 1 kw traversant le bilame et le contact 8 pour 3 + 4 = 7 kw.

En effet, si la puissance de consigne maximale passe à la puissance de consigne minimale alors que la puissance consommée traversant le bilame est de 1 kw ce qui correspond à une puissance consommée de 3 kw, on coupe immédiatement les appareils non prioritaires pour éviter que le bilame du disjoncteur qui est traversé maintenant par la totalité du courant au lieu d'être traversé par le tiers du courant, ne s'échauffe et dépasse par inertie le point de déclenchement du disjoncteur. Cette coupure fera tomber la puissance consommée mais d'au maximum 4 kw, puissance des appareils non prioritaires. Si elle est supérieure à 7 kw, situation détectée par le contact 8, il faut donc couper également les appareils de seconde priorité. A partir de ce moment, on laisse le relais de délestage fonctionner normalement avec le contact 5 de délestage qui, lorsqu'il est établi, coupe les appareils non prioritaires ou les appareils de seconde priorité si les appareils non prioritaires ont déjà été coupés et le contact 6 qui, lorsqu'il est coupé, réenclenche les appareils de seconde priorité ou les appareils non prioritaires si les appareils de seconde priorité étaient déjà coupés.

On va maintenant décrire un exemple du circuit électromagnétique commandé par ce détecteur de puissance consommée dans le cadre d'un relais de délestage,étant bien évident que les relais et disjoncteurs décrits peuvent être remplacés par des montages électroniques équivalents. Le détecteur lui-même pourrait être constitué par un montage électronique, mais des contacts mécaniques ou des prises enfichables dont le positionnement peut être réglable peuvent présenter une plus grande facilité de réglage.

Le circuit électromagnétique comporte un disjoncteur 10 dont la bobine de déclenchement 11 est commandée par le contact 9 et un relais de téléréglage 12 qui comporte, outre l'armature 3 qui coupe le shunt comportant la résistance 2, deux armatures 13 et 14 dont l'un des plots est relié aux contacts 7 et 8 respectivement, ces armatures fermant leurs contacts lorsque le relais est excité. Ce relais de téléréglage est alimenté par un contacteur télécommandé 15 de type connu. Le deuxième plot des armatures 13 et 14 est relié à la bobine des disjoncteurs 16 et 17 respectivement, ces disjoncteurs contrôlant respectivement l'alimentation des appareils non prioritaires 18 et des appareils de seconde priorité 19, les appareils prioritaires 20 étant alimentés directement par la phase.

Le relais 16 est un relais retardé à la fermeture et le relais 17 un relais retardé à l'ouverture, ce retard étant de l'ordre de plusieurs secondes et fixé selon l'inertie du détecteur de puissance 1 comme cela sera exposé ci-après. Dans les circuits entre les armatures 13 et 14 et les bobines de relais 16 et 17 sont connectées les armatures 22 du relais 21 retardé à l'ouverture, la durée de ce retard correspondant au délai nécessaire au détecteur de puissance 1 pour prendre sa position d'équilibre après coupure du shunt. Ce relais est alimenté par le contact 7 car il n'a à intervenir que si au moins ce contact est fermé. Les relais 16 et 17 sont auto-alimentés par le contact 6 et leur armature 23 en position d'ouverture et ils sont alimentés par la fermeture du contact 5 par leur armature 23 en position de fermeture.

Le fonctionnement du relais de délestage associé à un disjoncteur limiteur de puissance, les deux appareils étant téléréglables, sera expliqué ci-après. Le contacteur télécommandable 15 étant ouvert, les relais sont dans la position représentée. L'armature 3 étant fermée et comme exposé ci-dessus, seul le tiers du courant traverse le bilame 1. Avec les chiffres donnés ci-dessus, lorsque la consommation atteint 3 kw (1 kw dans le bilame) le contact 7 se ferme, mais l'armature 13 étant ouverte, cette fermeture est sans action. Il en est de même pour 7 kw pour laquelle le contact 8 se ferme (2kw 7 dans le bilame). Si la consommation atteint 8 kw, le contact 6 se ferme mais le circuit aboutit sur les plots ouverts de l'armature 23 des relais 16 et 17. Pour 9 kw le contact 5 est fermé et il alimente les relais 16 et 17. Le relais 17 étant retardé à l'ouverture, le relais 16 s'ouvre le premier et coupe les appareils non prioritaires 18. La réduction de la puissance consommée peut inverser le déplacement du détecteur 1 après un retard dû à l'inertie calorifique qui est inférieur au retard du relais 17. Dans le cas contraire, le relais 17 s'ouvre également et coupe les appareils de seconde priorité. Si la consommation par le circuit prioritaire reste trop importante, le contact 9 se ferme et le disjoncteur 10 déclenche. Si par contre la consommation retombe en dessous de 8 kw, le contact 6 qui maintenait auto-excités les relais 16 et 17 s'ouvre, ce qui supprime l'alimentation des relais. Le relais 17 se referme et si la consommation globale reste inférieure à 8kw, le relais 16 se ferme également avec un retard qui tient compte de l'inertie du détecteur de puissance pour réagir à la consommation des appareils 19 après la fermeture du relais 17.

Si pendant le fonctionnement et à un moment quelconque le contacteur télécommandé se ferme, le relais 12 est alimenté, il ouvre son armature 3 et ferme ses armatures 13 et 14. La totalité de la consommation passe dans le bilame 1. Il existe à ce moment trois possibilités. La consommation instantanée au moment de la commutation était supérieure à 7 kw et les contacts 7 et 8 étaient fermés ; la fermeture des armatures 13 et 14 va ouvrir le relais 16 puis, après un délai, le relais 17 à moins que l'ouverture du relais 16 n'ait provoqué une réduction suffisante de la charge. La consommation instantanée au moment de la consommation était comprise entre 3 et 7 kw et le contact 7 était fermé, la fermeture du relais 12 va provoquer la fermeture du seul relais 16 et la coupure des appareils non prioritaires 18. Dans l'un et l'autre cas, le relais 21 va s'ouvrir avec un certain retard qui est fixé pour être suffisant pour permettre au bilame 1 de se déformer pour que le contact soit établi sur le contact 6,ce qui aura lieu si la consommation globale est supérieure à 2 kw6. Si elle est inférieure à 2 kw 6, le relais 21 s'ouvrant, le relais 17 non alimenté se referme,ce qui autorise un relèvement de la consommation par les appareils de seconde priorité 19, mais si la consommation devient alors supérieure à 3 kw, le contact 5 fermé réouvre le relais 17. Si la consommation globale des appareils prioritaires et de seconde priorité 19 et 20 est inférieure à 2kw6 pendant le retard à la fermeture du relais 16, celui-ci se referme et autorise l'alimentation des appareils non prioritaires 18. Si la consommation globale des appareils prioritaires 20 excède 3 kw, le contact 9 est fermé et le disjoncteur 11 déclenche. Un cas particulier peut se produire qui est la fermeture du contact 7 et du contact 8 qui n'étaient pas fermés à l'origine par exemple si, avec les chiffres ci-dessus, la consommation était de 2 kw 5. Dans ce cas, les appareils 18 et 19 pourraient se trouver coupés pendant le délai nécessaire à l'ouverture du relais 21. On peut y remédier par un relais supplémentaire monté en bascule avec le relais 21, ce relais ouvrant,au fonctionnement du relais 12, des armatures en série avec les armatures 13 et 14, si le relais 21 n'est pas alimenté. Ce montage classique n'a pas été représenté pour ne pas alourdir la figure.

Un relais de délestage avec disjoncteur de puissance à seuil téléréglable qui présente l'avantage de ne pas comporter de coupure du shunt du détecteur de puissance est représenté à la figure 2. Pour plus de simplification, on a supprimé le système à appareils de seconde priorité pour ne conserver que les appareils prioritaires 20 et non prioritaires 18. On retrouve dans ce mode de réalisation les mêmes éléments ou des éléments équivalents désignés par les mêmes références. La différence essentielle est qu'il existe deux jeux de contacts 5, 6 - 5', 6' qui correspondent les premiers à la détection de 9 et 8 kw et les seconds à, par exemple, 3 et 2,6 kw, ces valeurs pouvant bien évidemment être modifiées par réglage de la posición des contacts, par modification de la valeur de la résistance de shunt 2, etc. Le relais 12 est un basculeur qui sélectionne la mise en service soit des contacts 5 et 6 lorsque la puissance allouée est la puissance maximale souscrite, soit des contacts 5', 6' lorsque la puissance allouée est la puissance de crise. Le relais 24 est un relais à retard à la fermeture dont l'armature ferme le circuit d'alimentation du déclencheur du disjoncteur 10.

Le fonctionnement découle de celui ci-dessus décrit avec référence à la figure 1. Lorsque le contact 5 ou 5' qui est en circuit se ferme pour une consommation dépassant 9 ou 3kw, les relais 16 et 24 sont excités, le relais 16 coupe les appareils non prioritaires 18 et assure son auto-excitation par le contact 6 ou 6'. Si la surcharge subsiste après le retard du relais 24, celui-ci ferme son contact ce qui déclenche le disjoncteur 10.

Dans le mode de réalisation de la figure 3, on retrouve les mêmes éléments désignés par les mêmes références, mais on n'a pas représenté le disjoncteur 11 qui pourrait être alimenté par le point commun des contacts 5 et 5'. Deux détecteurs 1 et 1' sont montés en série et coopèrent avec les contacts 5,6 et 5',6' respectivement. Le détecteur 1 est shunté par une résistance 2 qui peut être réglable pour régler son seuil de fonctionnement. Le détecteur 1' qui peut être shunté par une résistance 2' également réglable, est shunté par l'armature 3 du relais 12 commandé par le contacteur télécommandable 15. L'armature 3 offre une résistance très faible de sorte que le courant circule de préférence en traversant cette armature, le détecteur 1' n'étant traversé par aucun courant ou par un courant très faible. Par contre, le détecteur 1 est traversé par une fraction du courant consommé et en cas de dépassement de la puissance de consigne, le délestage est contrôlé par les contacts 5 et 6. Si l'armature 3 est ouverte et la résistance 2' étant plus élevée que la résistance 2, le courant qui traverse le détecteur 1' est plus élevé que celui qui traverse le détecteur 1 et il correspond à la totalité du courant consommé si 2' n'existe pas. Donc 1' sera le détecteur actif qui, pour 3 kw avec les chiffres ci-dessus, assurera le contact sur 5' et le délestage des appareils non prioritaires.

Les modes de réalisation ci-dessus décrits à titre d'exemples sont susceptibles de recevoir de nombreuses modifications, notamment par substitution d'équivalents électroniques, sans sortir du cadre des revendications ci-annexées.

Revendications

1. Un procédé d'exploitation d'un réseau électrique par modulation de la puissance par téléréglage du seuil de déclenchement des disjoncteurs de puissance, caractérisé en ce qu'on envoie un signal associé au signal de commande de modification du seuil de déclenchement du disjoncteur, pour modifier la puissance de consigne ou seuil de fonctionnement du relais de délestage associé.

2. Un procédé d'exploitation d'un réseau électrique selon la revendication 1, caractérisé en ce que le signal de modification de la puissance de consigne du relais de délestage est différent du signal de commande de modification du seuil de déclenchement du disjoncteur et antérieur à ce dernier.

3. Un procédé d'exploitation d'un réseau électrique selon la revendication 1, caractérisé en ce que le même signal est utilisé pour commander les deux modifications de seuil.

4. Un relais de délestage, caractérisé en ce qu'il comporte un détecteur de signal de commande 15 qui modifie le seuil de fonctionnement du détecteur 1 de puissance consommée du relais de délestage 16-17.

5. Un relais de délestage selon la revendication 4, caractérisé en ce que la modification de son seuil de fonctionnement est obtenue par ouverture d'un shunt calibré 2, 3 (Fig. 1) monté en parallèle avec le détecteur de puissance 1.

6. Un relais de délestage selon la revendication 4, caractérisé en ce que la modification de son seuil de fonctionnement est obtenue par ouverture d'un shunt 3 (Fig 3) court-circuitant, parmi une pluralité de détecteurs de puissance 1-1', ceux 1' dont le seuil de fonctionnement est inférieur à la puissance autorisée.

7. Un relais de délestage selon la revendication 4, caractérisé en ce que la modification de son seuil de fonctionnement est obtenue par commutation 12 (Fig 2) des circuits de commande 5-6 , 5'-6' entre les détecteurs de puissance 1 et les disjoncteurs 16 contrôlant les circuits d'alimentation des différents groupes 18 d'appareils.

8. Un relais de délestage selon l'une quelconque des revendications 4 à 7, caractérisé en ce que le dispositif de télécommande 12 et le ou les détecteurs de puissance 1 sont communs au disjoncteur de puissance 11 et au relais de délestage 16, un retard 24-25 étant introduit dans le fonctionnement du disjoncteur de puissance 11.

9. Un relais de délestage selon l'une quelconque des revendications 4 à 8, caractérisé en ce qu'il comporte un dispositif 7-8 de détection du dépassement de la puissance de consigne pour la puissance allouée la plus faible pendant le fonctionnement à la puissance allouée maximale, ce dispositif commandant le délestage 13-14-22 dès la réception du signal 12 de modification de la puissance allouée.

0033273

Fig:1

0033273

2/2

Fig.2

Fig.3